# EUROPEAN PATENT APPLICATION

(11) **EP 3 875 540 A1**
(43) Date of publication of application: **08.09.2021**
(21) Application number: 19878864.8
(22) Date of filing: 08.10.2019
(51) Int. Cl.: C08L 67/02, B29C 64/153, B29C 64/314, B33Y 10/00, B33Y 40/00, B33Y 70/00, C08K 3/00, C08L 69/00

(54) **POWDER MIXTURE, METHOD FOR PRODUCING SAME, POWDER COMPOSITION AND METHOD FOR PRODUCING THREE-DIMENSIONAL MODEL**

(30) Priority: 30.10.2018 JP 2018204190
(71) Applicant: Toray Industries, Inc., Tokyo, 103-8666 (JP)
(72) Inventor: WATANABE, Kei, Nagoya-shi, Aichi 455-8502 (JP); TAKEDA, Kazusada, Otsu-shi, Shiga 520-8558 (JP); ISHIBASHI, Junji, Tokai-shi, Aichi 476-8567 (JP); MIYAMA, Hisashi, Tokyo 103-8666 (JP); NISHIDA, Mikiya, Tokyo 103-8666 (JP)
(74) Representative: Mewburn Ellis LLP
(86) International application number: PCT/JP2019/039694
(87) International publication number: WO 2020/090381

(57) **Abstract**

A powder particle mixture which contains a polybutylene terephthalate resin and a polycarbonate resin, and which is characterized in that: the average particle diameter thereof is more than 1 µm but 100 µm or less; the uniformity thereof is 4 or less; the melting point thereof is more than 220°C; and the difference between the melting point thereof and the crystallization temperature thereof is 60°C or more. A powder particle composition which is characterized by containing inorganic microparticles that have an average particle diameter of 20-500 nm at a ratio of 0.1-5 parts by weight relative to 100 parts by weight of the powder particle mixture. The present invention efficiently provides a polybutylene terephthalate resin powder which is suitable as a material powder for the production of a three-dimensional shaped product by means of Selective Laser Sintering 3D printer.

## Description

### Technical Field of the Invention

Our invention relates to a powder particle mixture suitable as a powder material to produce a three-dimensional object by Selective Laser Sintering 3D printer, its production method, its powder particle composition and a production method of the three-dimensional object.

### Background Art of the Invention

There is a technique called "Rapid Prototyping (RP)" known for shaping a three-dimensional object. This technique of shaping a three-dimensional object draws cross section shapes of slices to be laminated to shape a three-dimensional object by calculation with Standard Triangulated Language (STL)-formatted data describing unstructured triangulated surface of a three-dimensional shape. Three-dimensional objects can be shaped by a method such as Fused Deposition Molding (FDM), UV-curable ink jet method, Stereo Lithography (SL), Selective Laser Sintering (SLS) and ink-jet binder method. Above all, it is advantageous to employ the Selective Laser Sintering which sequentially repeats a thin layer formation process to develop the thin layer with powder and a cross-section shape formation process to bind the powder with the formed thin layer by irradiating laser to a shape corresponding to the cross-section of a shaped object, because the SLS is suitable for precision shaping more than other shaping methods and doesn't require support members. Patent document 1 discloses a method to manufacture an artificial bone model from powder mixture of synthetic resin powder of 30 to 90wt% and inorganic filler of 10 to 70wt%. Such a technique is promising as a method to manufacture a complicated shape difficult to be manufactured by a conventional molding method represented by injection molding and extrusion molding.

Polybutylene terephthalate resin (which may be abbreviated as PBT resin, hereinafter) has excellent characteristics such as heat resistance, barrier characteristics, chemical resistance, electric insulation and moist heat resistance desirable for engineering plastics, and is used as various electric/electronic parts, machine parts and automotive parts, film, fiber and the like, manufactured mainly by injection molding or extrusion molding.

Such a resin having an excellent heat resistance is highly demanded to be applied to materials for 3D printer. The resin powder particles prepared by pulverizing copolymerized PBT resin disclosed in Patent document 2 and semicrystalline or crystalline aromatic PBT resin powder particles disclosed in Patent document 3 can be used as resin for the 3D printer.

### Prior art documents

### Patent documents

Patent document 1: JP2004-184606-A
Patent document 2: JP6033994-B
Patent document 3: JP2017-19267-A

### Summary of the Invention

### Problems to be solved by the Invention

Because the resin powder particle disclosed in Patent document 2 has a melting point of less than that of homo PBT resin, shaped objects might have a deteriorated heat resistance although 3D printer device having a low upper temperature limit is available for shaping. Further, the resin powder particle disclosed in Patent document 3 available for shaping with 3D printer has a low heat resistance and a melting point of 150°C or less. The PBT resin is not suitable for shaping with 3D printer because of small difference between the melting point and the crystallization temperature.

Accordingly, it could be helpful to efficiently provide a PBT resin powder particle which has characteristics suitable as materials for 3D printer for shaping a product excellent in heat resistance.

### Means for solving the Problems

To solve the above-described problems, we made the following invention. Our invention has the following configuration.
(1) A powder particle mixture containing a polybutylene terephthalate resin and a polycarbonate resin, having: 1 to 100 µm of an average particle diameter; 4 or less of a uniformity; more than 220°C of a melting point; and 60°C or more of a difference between the melting point and a crystallization temperature.
(2) The powder particle mixture according to (1), containing the polybutylene terephthalate resin of 100 parts by weight and the polycarbonate resin of 40 to 150 parts by weight.
(3) The powder particle mixture according to (1) or (2), comprising a mixture of polybutylene terephthalate resin powder particles and polycarbonate resin powder particles.
(4) The powder particle mixture according to (1) or (2), comprising polymer alloy powder particles containing the polybutylene terephthalate resin and the polycarbonate resin.
(5) The powder particle mixture according to (4), wherein the polymer alloy powder particles have a bicontinuous phase structure of which structural period is 0.001 to 0.1 µm or have a dispersion structure of which interparticle distance is 0.01 to 1 µm.
(6) The powder particle mixture according to any one of (1) to (5), wherein the polybutylene terephthalate resin has a terminal carboxyl group of 35 to 50 eq/t.
(7) A method for producing the powder particle mixture according to (3), comprising a step of mixing the polybutylene terephthalate resin powder particles with the polycarbonate resin powder particles.
(8) A method for producing the powder particle mixture according to (4) or (5), comprising a step of pulverizing the polymer alloy powder particles containing the polybutylene terephthalate resin and the polycarbonate resin.
(9) The method for producing the powder particle mixture according to (8), wherein the polymer alloy powder particles have a bicontinuous phase structure of which structural period is 0.001 to 0.1 µm or have a dispersion structure of which interparticle distance is 0.01 to 1 µm.
(10) A powder particle composition containing 100 parts by weight of the powder particle mixture according to any one of (1) to (6) and 0.1 to 5 parts by weight of inorganic microparticles having an average particle diameter of 20 to 500 nm.
(11) The powder particle composition according to (10), wherein the inorganic microparticles are made of silica.
(12) The powder particle composition according to (10) or (11), containing 100 parts by weight of the powder particle mixture according to any one of (1) to (6) and 25 to 150 parts by weight of an inorganic reinforcing material having an average maximum length of 1 to 200 µm.
(13) The powder particle composition according to (12), wherein the inorganic reinforcing material is made of at least one of glass bead, glass flake, glass fiber, carbon fiber, aluminum oxide, soda-lime glass, borosilicate glass, silica, aluminosilicate ceramic, limestone, gypsum, bentonite, precipitated sodium silicate, amorphous precipitated silica, amorphous precipitated calcium silicate, amorphous precipitated magnesium silicate, amorphous precipitated lithium silicate, salt, portland cement, magnesium phosphate cement, oxymagnesium chloride cement, oxymagnesium sulfate cement, zinc phosphate cement, zinc oxide, titanium oxide and potassium titanate.
(14) A method for producing a three-dimensional object, comprising a step of shaping a three dimensional object by a selective laser sintering 3D printer from the powder particle mixture according to any one of (1) to (6) or from the powder particle composition according to any one of (10) to (13).

### Effect according to the Invention

Our invention makes it possible to efficiently provide a powder particle mixture (which may be abbreviated as PBT/PC powder particles, hereinafter) containing polybutylene terephthalate and polycarbonate and being suitable as a powder material to produce a three-dimensional shaped object by Selective Laser Sintering 3D printer.

### Embodiments for carrying out the Invention

### [PBT resin]

In the specification, the polybutylene terephthalate resin (PBT resin) means a resin containing 80 wt% or more of polybutylene terephthalate. It is preferable that it contains 85 wt% or more of polybutylene terephthalate. It is possible that it is copolymerized or blended with another resin. In the specification, the polybutylene terephthalate means a polymer comprising butylene terephthalate components as a main repeating unit. The main repeating units are contained by 80 mol% or more among all repeating units. It is preferable that the main repeating units are contained by 85 mol% or more. It is possible to contain an acid component of: aromatic dicarboxylic acid such as isophthalic acid, orthophthalic acid, naphthalenedicarboxylic acid, diphenyl dicarboxylic acid and sodium sulfoisophthalic acid; alicyclic dicarboxylic acid such as cyclohexane dicarboxylic acid and decalin dicarboxylic acid; or aliphatic dicarboxylic acid such as oxalic acid, malonic acid, succinic acid, sebacic acid, adipic acid and dodecanedioic acid. It is also possible to contain an diol component of: aliphatic diol such as ethylene glycol, diethylene glycol, triethylene glycol, polyethylene glycol, propylene glycol, neopentylglycol, 1,6-hexanediol, polypropylene glycol and polytetramethylene glycol; alicyclic diol such as 1,4-cyclohexanediol and 1,4-cyclohexanedimethanol; or aromatic diol such as 2,2-bis(4'-hydroxyphenyl) propane. It is preferable that the component of 40 mol% or less is copolymerized with 100 mol% of terephthalic acid or 1,4-butandiol.

It is preferable that the polybutylene terephthalate has a weight average molecular weight of 1,000 to 1,000,000. It is more preferably 5,000 or more, preferably 10,000 or more. It is more preferably 500,000 or less, and is further preferably 100,000 or less, preferably 50,000 or less.

The weight average molecular weight of polybutylene terephthalate of less than 1,000 might not have excellent strength at the time of shaping while the weight average molecular weight of more than 1,000,000 might have too high a melt viscosity to easily perform a shaping process.

The weight average molecular weight can be measured by Gel Permeation Chromatography (GPC) using 1,1,1,3,3,3 -hexafluoro-2-propanol solvent to calculate a weight average molecular weight in terms of polystyrene.

It is preferable that the polybutylene terephthalate has a terminal carboxyl group of 35 eq/t or more and 50 eq/t or less. It is more preferably 48 eq/t or less, preferably 45 eq/t or less. It is more preferably 35 eq/t or more, preferably 37 eq/t or more. The terminal carboxyl group of more than 50 eq/t might greatly deteriorate hydrolysis resistance of the three-dimensional object shaped with 3D printer. The terminal carboxyl group amount of PBT can be determined by potentiometric titration of powder particle or polymer raw material used for producing polymer alloy raw material to be described later. The terminal carboxyl group amount of less than 35 eq/t might increase the reaction rate of solid-phase polymerization of polybutylene terephthalate. Such an increased reaction rate of solid-phase polymerization of polybutylene terephthalate might greatly increase the viscosity of the resin powder particle material as causing defective shaping because the material is heated at a high temperature for a long time.

### [PC resin]

In our invention, it is important that polycarbonate resin (which may be abbreviated as PC resin, hereinafter) is blended to decrease the crystallization temperature of PBT/PC powder particle. It is preferable that the polycarbonate of 40 to 150 parts by weight is blended with polybutylene terephthalate of 100 parts by weight. It is more preferable that the upper limit of polycarbonate content is 140 parts by weight, preferably 130 parts by weight. It is more preferable that the lower limit of polycarbonate content is 50 parts by weight, preferably 60 parts by weight.

The polycarbonate content of less than 40 parts by weight might insufficiently decrease the crystallization temperature of PBT/PC powder particle, so that 3D printer shaping is difficult while unmelted powder aggregated after shaping at a high powder temperature cannot be reused easily.

### [PBT/PC powder particle]

In our invention, PBT/PC powder particles have an average particle diameter of more than 1 µm and 100 µm or less. It is preferable that the lower limit of the average particle diameter of the PBT/PC powder particles is 3 µm. It is more preferably 5 µm, further preferably 8 µm, particularly preferably 10 µm, remarkably preferably 13 µm and most preferably 15 µm. It is preferable that the upper limit of the average particle diameter is 95 µm. It is more preferably 90 µm, further preferably 85 µm, particularly preferably 80 µm, remarkably preferably 75 µm and most preferably 70µm.

The PBT/PC powder particles should have a uniform particle size distribution. The PBT/PC powder particles have a uniformity of 4.0 or less. It is preferable that the uniformity of the PBT/PC powder particles is preferably 3.5 or less, further preferably 3.0 or less, particularly preferably 2.5 or less and remarkably preferably 2.0 or less. Although the lower limit of the uniformity is 1 theoretically, it is practically preferably 1.1 or more. It is more preferably 1.2 or more, further preferably 1.3 or more, particularly preferably 1.4 or more and remarkably preferably 1.5 or more. The uniformity of the PBT/PC powder particles of more than 4 might not be able to achieve an effect of our invention and form a uniform powder surface at the time of powder lamination with 3D printer even when the average particle diameter is within a proper range.

In this specification, the average particle diameter of the PBT/PC powder particles is a particle diameter (d50) of which cumulative frequency is 50% from the smaller particle diameter side of particle size distribution measured with a laser diffraction particle size distribution meter based on the dispersion/diffraction theory of Mie.

In this specification, the uniformity of the PBT/PC powder particles is a quotient of particle diameter (d60) of which cumulative frequency is 60% from the smaller particle diameter side of particle size distribution measured by the above-described method divided by particle diameter (d10) of which cumulative frequency is 10% from the smaller particle diameter side.

The PBT/PC powder particles should have a melting point of more than 220°C. The melting point of 220°C or less might not be able to shape a desirable three-dimensional object excellent in heat resistance.

The difference between crystallization temperature and melting point of the PBT/PC powder particles should be 60°C or more. The melting point corresponds to endothermic peak top accompanying the melting while the crystallization temperature corresponds to exothermic peak top accompanying the crystallization, when the powder particle mixture is subject to the Differential Scanning Calorimetry method (DSC method), in which temperature is increased at 20°C/min from 30°C to the temperature of 30°C higher than the highest melting point of raw material polymer contained in the powder particle mixture, and then is decreased to 0°C at 20°C/min after being kept for 1 min. When there are two or more peaks, the melting point and the crystallization temperature are determined by the peak top of which temperature is the highest. The difference between crystallization temperature and melting point of the PBT/PC powder particles of less than 60°C might crystallize the PBT/PC powder particles melted by laser irradiation to cause shrink and warpage. The warpage might drag a layer while the upper layer is laminated, so that three-dimensional object having a desirable shape cannot be shaped.

### [Inorganic microparticle]

Inorganic microparticle can be added to improve the fluidity of PBT/PC powder particle. The fluidity of PBT/PC powder particles tends to deteriorate by interaction of neighbor particles when the particle diameter is small. Therefore, the fluidity of PBT/PC powder particles can be improved by adding inorganic microparticles having a particle diameter smaller than that of PBT/PC powder particles to widen the interparticle distance.

In our invention, inorganic microparticles having an average particle diameter of 20 nm to 500 nm are added to the PBT/PC powder particle. The average particle diameter is determined by the same method as the above-described measurement method of average particle diameter of PBT/PC powder particles.

It is preferable that the upper limit of the average particle diameter of the inorganic microparticles is 400 nm. It is preferably 300 nm, more preferably 200 nm, particularly preferably 150 nm and remarkably preferably 100 nm. It is preferable that the lower limit is 30 nm. It is preferably 40 nm and more preferably 50 nm. The average particle diameter of inorganic microparticles of more than 500 nm might not sufficiently improve the fluidity of the PBT/PC powder particle. The average particle diameter of inorganic microparticles of less than 20 nm might not be able to decrease the compression degree of the PBT/PC powder particles although the fluidity can be improved.

It is possible to add inorganic microparticles having the above-described particle diameter. It is preferable that the inorganic microparticle is: calcium carbonate powder such as light calcium carbonate, heavy calcium carbonate, fine calcium carbonate and specialty calcium-based filler; clay (aluminum silicate powder) such as silane-modified clay and calcined clay of nepheline syenite fine powder, montmorillonite or bentonite; talc; powder silica (silicon dioxide) such as molten silica, crystal silica and amorphous silica; silicic acid-containing compound such as diatomaceous earth and quartz sand; pulverized natural mineral product such as pumice powder, pumice balloon, slate powder and mica powder; alumina-containing compound such as alumina (aluminum oxide) alumina colloid (alumina sol), alumina white and aluminum sulfate; mineral such as barium sulfate, lithopone, calcium sulfate, molybdenum disulfide and graphite (black lead); glass-based filler such as glass fiber, glass bead, glass flake and foaming glass bead; or fly ash ball, volcanic glass hollow body, synthetic inorganic hollow body, potassium titanate single crystal, carbon fiber, carbon nanotube, carbon hollow sphere, carbon 64 fullerene, smokeless coal powder, artificial cryolite, titanium oxide, magnesium oxide, basic magnesium carbonate, dolomite, potassium titanate, calcium sulfite, mica, asbestos, calcium silicate, aluminum powder, molybdenum sulfide, boron fiber or silicon carbide fiber. It is further preferable to employ calcium carbonate powder, silica powder, alumina-containing compound or glass-based filler. It is particularly preferable to employ silica powder such as amorphous silica powder which is less noxious to human body as an industrially preferable example.

The inorganic microparticle may have a shape being spherical, porous, hollow or amorphous. It is preferable that the shape is spherical from a viewpoint of good fluidity.

The spherical shape includes a distorted sphere as well as a true sphere. The shape of the inorganic microparticle should be evaluated with degree of circularity of two-dimensional projection of particle. The said degree of circularity means a value calculated by a formula of (Peripheral length of circle having the same area as projected image of particle)/(Peripheral length of projected image of particle). It is preferable that the inorganic microparticles have an average degree of circularity of 0.7 to 1, more preferably 0.8 to 1 and further preferably 0.9 to 1.

To achieve the effect of our invention, the silica powder may be made by a process such as: combustion process to combust silane compound to produce fumed silica; deflagration process to deflagrate metal silicate powder to produce deflagrated silica; neutralization process to neutralize sodium silicate with mineral acid to produce wet silica (which may be sedimented silica aggregated by synthesis in alkaline condition or may be gel method silica aggregated by synthesis in acidic condition); polymerization process to polymerize alkaline silicic acid made from acidic silicic acid prepared by removing natrium from sodium silicate with ion exchange resin to produce colloidal silica (silica sol); and sol-gel process to hydrolyze silane compound to produce sol-gel method silica. It is preferable that the silica powder is made of sol-gel method silica.

It is preferable that the inorganic microparticle is made of silica, preferably sol-gel method silica and/or spherical silica, further preferably sol-gel method spherical silica.

It is more preferable that the inorganic microparticle is subject to hydrophobic surface treatment with silane compound or silazane compound. The treated hydrophobic surface can suppress aggregation between inorganic microparticles to improve dispersion of inorganic microparticle into the PBT/PC powder particle. The above silane compound may be a unsubstituted or halogen-substituted trialkoxy silane such as methyl trimethoxysilane, methyl triethoxysilane, ethyl trimethoxysilane, ethyl triethoxysilane, n-propyl trimethoxysilane, n-propyl triethoxysilane, isopropyl trimethoxysilane, isopropyl triethoxysilane, butyl trimethoxysilane, butyl triethoxysilane, hexyl trimethoxy silane, trifluoropropyl trimethoxysilane and heptadecafluorodecyl trimethoxysilane. It is preferably methyl trimethoxysilane, methyl triethoxysilane, ethyl trimethoxysilane or ethyl triethoxysilane, more preferably methyl trimethoxysilane, methyl triethoxysilane or product of partial hydrolysis/condensation. The silazane compound may be hexamethyldisilazane or hexaethyl disilazane and is preferably hexamethyldisilazane. The silane compound which is monofunctional may be: a monosilanol compound such as trimethylsilanol and triethyl silanol; a monochloro silane such as trimethyl chlorosilane and triethyl chlorosilane; a monoalkoxy silane such as trimethyl methoxysilane and trimethyl ethoxysilane; a monoamino silane such as trimethylsilyl dimethylamine, trimethylsilyl diethyl amine; or a monoacyl oxysilane such as trimethyl acetoxy silane. It is preferably trimethylsilanol, trimethyl methoxysilane or trimethylsilyl diethylamine, particularly preferably trimethylsilanol or trimethyl methoxysilane.

These inorganic microparticles can be used by each one or combination of two kinds or more.

The inorganic microparticle of 0.1 to 5 parts by weight is blended with 100 parts by weight of PBT/PC powder particle. It is preferable that the upper limit of its content is 4 parts by weight, preferably 3 parts by weight. It is preferable that the lower limit of its content is 0.2 parts by weight, preferably 0.3 parts by weight and further preferably 0.4 parts by weight.

### [Inorganic reinforcing material]

In our invention, inorganic reinforcing material can be added to improve strength of shaped product made of PBT/PC powder particle.

The inorganic reinforcing material added to the PBT/PC powder particles has a maximum dimension of 1 to 200 µm. It is preferable that the upper limit of the maximum dimension of the inorganic reinforcing material is 180 µm. It is more preferably 170 µm, further preferably 160 µm and particularly preferably 150 µm. It is preferable that the lower limit is 5 µm. It is more preferably 10 µm and further preferably 15 µm. The maximum dimension of inorganic reinforcing material of more than 200 µm might greatly deteriorate the fluidity of the PBT/PC powder particle. The maximum dimension of inorganic reinforcing material of less than 1 µm might not improve the strength of shaped product of PBT/PC powder particles although the fluidity can be improved.

The maximum length of fibrous inorganic reinforcing material is fiber length and the average maximum length (maximum dimension) is calculated by averaging fiber lengths. It is preferable that the fiber diameter is 0.1 to 50 µm. It is more preferable that the lower limit of the fiber diameter is 0.5 µm, preferably 1 µm. It is more preferable that the upper limit of the fiber diameter is 40 µm and further preferably 30 µm. The said fiber length and fiber diameter mean average values of each length of randomly-selected 100 fibers observed in electron microscope images magnified by 1,000 times.

The average maximum length of non-fibrous inorganic reinforcing material is calculated by averaging particle diameters. The average particle diameter can be measured by the same method as the above-described measurement method of average particle diameter of PBT/PC powder particles.

It is possible to employ inorganic reinforcing material having the above-described maximum dimension. It is preferable that the inorganic reinforcing material is: calcium carbonate powder such as light calcium carbonate, heavy calcium carbonate, fine calcium carbonate and specialty calcium-based filler; clay (aluminum silicate powder) such as silane-modified clay and calcined clay of nepheline syenite fine powder, montmorillonite or bentonite; talc; silicic acid-containing compound such as diatomaceous earth and quartz sand; pulverized natural mineral product such as pumice powder, pumice balloon, slate powder and mica powder; alumina-containing compound such as alumina (aluminum oxide) alumina colloid (alumina sol), alumina white and aluminum sulfate; mineral such as barium sulfate, lithopone, calcium sulfate, molybdenum disulfide and graphite (black lead); glass-based filler such as glass fiber, glass bead, glass flake and foaming glass bead; or fly ash ball, volcanic glass hollow body, synthetic inorganic hollow body, carbon fiber, carbon nanotube, carbon hollow sphere, carbon 64 fullerene, smokeless coal powder, artificial cryolite, titanium oxide, magnesium oxide, basic magnesium carbonate, dolomite, potassium titanate, calcium sulfite, mica, asbestos, calcium silicate, aluminum powder, molybdenum sulfide, boron fiber or silicon carbide fiber. It is further preferable to employ glass-based filler or carbon fiber. These inorganic reinforcing materials can be used by each one or combination of two kinds or more.

The inorganic reinforcing material of 25 to 150 parts by weight is blended with 100 parts by weight of powder particle mixture. It is preferable that the upper limit of its content is 140 parts by weight, preferably 130 parts by weight. It is preferable that the lower limit of its content is 30 parts by weight, preferably 35 parts by weight.

### [Production method of PBT/PC powder particle]

Our powder particle can be produced by pulverizing a raw material of PBT resin having a greater average particle diameter or PBT resin having a greater uniformity (which means nonuniform). It is possible that the pulverizing is performed with jet mill, bead mill, hammer mill, ball mill, sand mill, turbo mill or cryogenic mill. It is preferable to employ a dry mill such as turbo mill, jet mill and cryogenic mill, further preferably cryogenic mill.

Pellet shaped PBT resin can typically be employed although the shape of PBT resin before being pulverized is not limited in particular.

Our PBT/PC powder particles can be produced by a method to blend each pulverized PBT resin and PC resin or another method to pulverize polymer alloy pellet made by kneading PBT resin with melted PC resin. In the latter case, it is possible to employ a raw material of polymer alloy having a bicontinuous phase structure of which structural period is 0.001 to 0.1 µm or having a dispersion structure of which interparticle distance is 0.01 to 1 µm so that an object excellent in strength and toughness can be shaped with 3D printer. The raw material of polymer alloy having a bicontinuous phase structure of which structural period is 0.001 to 0.1 µm or having a dispersion structure of which interparticle distance is 0.01 to 1 µm can be prepared by melting two compatible components kneaded with a twin-screw extruder. It is preferable that the polymer alloy is blended with a third component such as block copolymer, graft copolymer and random copolymer containing a constituent of the polymer alloy so that free energy on the interface between separated phases is reduced to easily control the structural period of the bicontinuous phase structure and interparticle distance of the dispersion structure. The polymer alloy containing the third component of such a copolymer typically distributed to each phase of polymer alloy consisting of two components other than the third one can be handled like a polymer alloy consisting of two resin components. It is possible that the polymer alloy further contains another thermoplastic resin or a thermosetting resin to the extent that the basic structure of our invention is maintained. The thermoplastic resin may be polyethylene, polyamide, polyphenylene sulfide, polyetheretherketone, liquid crystalline polyester, polyacetal, polysulfone, polyether sulfone, polyphenylene oxide or the like while the thermosetting resin may be phenolic resin, melamine resin, unsaturated polyester resin, silicone resin, epoxy resin or the like.

It is possible that the PBT/PC powder particles are blended with inorganic microparticles and inorganic reinforcing material. To prepare a uniform PBT/PC powder particle, the PBT/PC powder particles can be blended with inorganic microparticles by a conventional method. It is possible that the above-described pulverization process is performed simultaneously with a mixing process with inorganic microparticles or inorganic reinforcing material.

The mixing process may be performed by: shaking; pulverization with ball mill or coffee mill; stirring with blade such as Nauta mixer, Henschel mixer and kneader; rotating a container with V-shape mixer; drying after blending the liquid phase in solvent; stirring with airflow generated by flash blender; spraying powder particle and/or slurry with atomizer; extrusion with twin-screw extruder; or the like.

### [Examples]

Hereinafter, our invention will be explained with reference to Examples and Comparative examples, although the scope of our invention is not limited to the Examples in particular. Characteristics are measured by the following methods.

### [Average particle diameter]

The average particle diameter of PBT/PC powder particles is measured with laser diffraction/scattering type particle counter MT3300EXII made by Nikkiso Co., Ltd. by using disperse medium of 0.5 mass% solution of polyoxyethylene cumylphenyl ether (product name: Nonal 912A made by TOHO CHEMICAL INDUSTRY Co., Ltd.). Specifically, the average particle diameter of the PBT/PC powder particles is defined as particle diameter (median diameter: d50) at 50% of cumulative frequency from the smaller particle diameter side of cumulative curve which is calculated under a condition of 100% of total volume of microparticles by analyzing laser scattering light according to the microtrac method. The average particle diameter of inorganic microparticles is measured by the same method as the average particle diameter of the PBT/PC powder particles.

### [Maximum dimension]

The maximum dimension is calculated by averaging maximum lengths of randomly-selected 100 fibers observed in electron microscope images magnified by 1,000 times.

### [Uniformity]

The uniformity of PBT/PC powder particles is defined as d60/d10 of particle diameter distribution measured with laser diffraction/scattering type particle counter MT3300EXII made by Nikkiso Co., Ltd. The broader the particle size distribution is, the greater the uniformity is.

### [Melting point and crystallization temperature]

The melting point and crystallization temperature of the PBT/PC powder particles are determined with DSC7 made by PerkinElmer Inc. by using PBT/PC powder particles of about 10mg in nitrogen atmosphere according to the following measurement condition. The melting point is defined as temperature of endothermic peak top accompanying the melting at the heating process while the crystallization temperature is defined as temperature of exothermic peak top accompanying the crystallization at the cooling process. When there are two or more peaks, the melting point and the crystallization temperature are determined by the peak top of which temperature is the highest.
- keeping 30°C for 1 min
- heating by 20°C/min from 50°C to 260°C
- keeping 260°C for 5 min
- cooling by 20°C/min from 260°C to 30°C

### [Terminal carboxyl group amount]

The terminal carboxyl group amount of PBT can be determined by potentiometric titration using ethanolic solution of potassium hydroxide with PBT of 2.0g dissolved with heated o-cresol/chloroform solvent (weight ratio of 2/1) of 50ml to be cooled after chloroform of 30ml and 12% methanolic solution of lithium chloride of 5ml are added.

### [Structural period or interparticle distance]

A 100µm-thickness section prepared by slicing a 3mm-thickness square plate prepared with injection molding machine (SG75H-MIV) made by Sumitomo Heavy Industries, Ltd. at cylinder temperature of 250°C and at a mold temperature of 80 to 140°C is subject to the iodine stain method to dye PC and is cut into an ultra thin section sample. The sample is observed with a transmission electron microscope by magnification of 10,000 at randomly-selected 100 parts for measuring structural periods to be averaged.

### [Example 1]

PBT resin ("TORAYCON" 1100S made by Toray Industries, Inc., terminal carboxyl group amount = 38eq/t) and PC resin ("Iupilon" H4000 made by Mitsubishi Engineering-Plastic Corporation) were immersed in liquid nitrogen. The resins were sufficiently cooled and crushed with a turbo mill each for 120 min to prepare PBT resin powder particles having average particle diameter of 50µm and uniformity of 2.9 and PC resin powder particle having average particle diameter of 55µm and uniformity of 3.3. The PBT resin powder particles of 6.0kg and PC resin powder particles of 4.0kg were blended by a tumbler type mixer to produce PBT/PC powder particles having average particle diameter of 52µm and uniformity of 3.0. The obtained PBT/PC powder particles had melting point of 223°C and crystallization temperature of 158°C. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 2]

PBT/PC powder particles were produced by the same method as Example 1, except that the PBT resin powder particles of 5.0kg and the PC resin powder particles of 5.0kg were blended. The obtained PBT/PC powder particles had average particle diameter of 54µm, uniformity of 3.1, melting point of 223°C and crystallization temperature of 155°C. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 3]

PBT/PC powder particles were produced by the same method as Example 1, except that 10g of inorganic microparticles made of sol-gel method spherical silica (X-24-9600A made by Shin-Etsu Chemical Co., Ltd.) of which surface has been treated with hexamethyldisilazane having average particle diameter of 170nm were added to 10kg of the PBT/PC powder particles. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 4]

PBT/PC powder particles were produced by the same method as Example 1, except that 3.5kg of inorganic reinforcing material made of glass fiber (EPG70M made by Nippon Electric Glass Co., Ltd.) having maximum dimension of 170µm were added to 10kg of the PBT/PC powder particles. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 5]

PBT resin ("TORAYCON" 1100S made by Toray Industries, Inc., terminal carboxyl group amount = 38eq/t) of 50kg and PC resin ("Iupilon" S2000 made by Mitsubishi Engineering-Plastic Corporation) of 50kg were fed to a twin-screw extruder of which extrusion temperature was set to 250°C and screw rotation speed was set to 200rpm and then strands discharged from a die were cooled in a cooling bath and pelletized with a strand cutter to prepare PBT/PC polymer alloy pellets. Each obtained pellet was dried with a hot-air drier at 110°C for 8 hours. The obtained PBT/PC polymer alloy pellet had interparticle distance of 0.11µm.

The PBT/PC polymer alloy pellets were immersed in liquid nitrogen to be sufficiently cooled and were crushed with a turbo mill each for 120 min to prepare PBT/PC powder particles having average particle diameter of 60µm and uniformity of 3.6. The obtained PBT/PC powder particles had melting point of 223°C and crystallization temperature of 157°C. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 6]

PBT/PC powder particles were produced by the same method as Example 5, except that 100g of inorganic microparticles made of sol-gel method spherical silica (X-24-9600A made by Shin-Etsu Chemical Co., Ltd.) of which surface is treated with hexamethyldisilazane having average particle diameter of 170nm were added to 100kg of the PBT/PC powder particles. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 7]

PBT/PC polymer alloy pellets were prepared by the same method as Example 5, except that phenol antioxidant (AO-80 made by ADEKA Corporation) of 0.5kg and phosphite antioxidant (PEP-36 made by ADEKA Corporation) of 1kg were added to the PBT resin ("TORAYCON" 1100S made by Toray Industries, Inc., terminal carboxyl group amount = 38eq/t) of 50kg and PC resin ("Iupilon" S2000 made by Mitsubishi Engineering-Plastic Corporation) of 50kg. The obtained PBT/PC polymer alloy pellet had interparticle distance of 0.11 *µ* m. The PBT/PC polymer alloy pellets were immersed in liquid nitrogen to be sufficiently cooled and were crushed with a turbo mill each for 120 min to prepare PBT/PC powder particles having average particle diameter of 60µm and uniformity of 3.7. The obtained PBT/PC powder particles had melting point of 223°C and crystallization temperature of 160°C. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Example 8]

PBT/PC powder particles were produced by the same method as Example 7, except that the PBT/PC powder particles were heated at 100°C in a nitrogen atmosphere for 75 hours. The obtained PBT/PC powder particles had melting point of 223°C and crystallization temperature of 159°C. The PBT/PC powder particles were subject to a Selective Laser Sintering 3D printer (RaFaEl 300HT made by ASPECT Inc.) to shape a three-dimensional object. A good three-dimensional object was shaped without rough powder surface at the time of powder lamination and warpage at the time of laser irradiation.

### [Comparative example 1]

PBT resin powder particles were produced by the same method as Example 1, except that the PC resin powder particles were not prepared while the PBT resin powder particles were prepared. The obtained PBT resin powder particles had melting point of 223°C and crystallization temperature of 185°C. The PBT resin powder particles were subject to a Selective Laser Sintering 3D printer (RaFaEl 300HT made by ASPECT Inc.) to shape a three-dimensional object. A three-dimensional object was not shaped because of warpage generated at the time of laser irradiation.

### [Comparative example 2]

PBT/PC powder particles were produced by the same method as Example 1, except that the PBT resin powder particles of 9.0kg and the PC resin powder particles of 1.0kg were blended. The obtained PBT/PC powder particles had average particle diameter of 51µm, uniformity of 2.9, melting point of 223°C and crystallization temperature of 174°C. The PBT/PC powder particles were subject to a Selective Laser Sintering 3D printer (RaFaEl 300HT made by ASPECT Inc.) to shape a three-dimensional object. A three-dimensional object was not shaped because of warpage generated at the time of laser irradiation. Further, aggregated PBT/PC powder particles in unmelted parts could not be reused.

### [Comparative example 3]

PBT resin ("TORAYCON" 1100S made by Toray Industries, Inc., terminal carboxyl group amount = 38eq/t) of 98.5kg, phenol antioxidant (AO-80 made by ADEKA Corporation) of 0.5kg and phosphite antioxidant (PEP-36 made by ADEKA Corporation) of 1kg were fed to a twin-screw extruder of which extrusion temperature was set to 250°C and screw rotation speed was set to 200rpm and then strands discharged from a die were cooled in a cooling bath and pelletized with a strand cutter to prepare PBT resin pellets. Each obtained pellet was dried with a hot-air drier at 110°C for 8 hours. The PBT resin pellets were immersed in liquid nitrogen to be sufficiently cooled and were crushed with a turbo mill for 120 min to prepare PBT powder particles having average particle diameter of 62µm and uniformity of 3.0. The obtained PBT resin powder particles had melting point of 223°C and crystallization temperature of 185°C. The PBT resin powder particles were subject to a Selective Laser Sintering 3D printer (RaFaEl 300HT made by ASPECT Inc.) to shape a three-dimensional object. A three-dimensional object was not shaped because of warpage generated at the time of laser irradiation.

### [Comparative example 4]

PBT resin powder particles were produced by the same method as Comparative example 3, except that the PBT resin powder particles were heated at 100°C in a nitrogen atmosphere for 75 hours. The obtained PBT resin powder particles had melting point of 223°C and crystallization temperature of 187°C. The PBT resin powder particles were subject to a Selective Laser Sintering 3D printer (RaFaEl 300HT made by ASPECT Inc.) to shape a three-dimensional object. A three-dimensional object was not shaped because of warpage generated at the time of laser irradiation.

### [Comparative example 5]

PBT resin powder particles were produced by the same method as Comparative example 3, except that the PBT resin powder particles were spheroidized at 9,600rpm for 20 min with Multi-Purpose mixer made by NIPPON COKE & ENGINEERING CO., LTD. The obtained PBT resin powder particles had average particle diameter of 62µm, uniformity of 3.0, melting point of 223°C and crystallization temperature of 185°C. The PBT resin powder particles were subject to a Selective Laser Sintering 3D printer (RaFaEl 300HT made by ASPECT Inc.) to shape a three-dimensional object. A three-dimensional object was not shaped because of warpage generated at the time of laser irradiation.

**[Table 1]**

| | PBT resin | | | | PC resin | | | Phenol antioxidant | Phosphite antioxidant | PBT/PC polymer alloy | PBT/PC powder particle | | | | Inorganic microparticle | | Inorganic reinforcing material | | 3D printer shaping | |
|---|---|---|---|---|---|---|---|---|---|---|---|---|---|---|---|---|---|---|---|---|
| | Additive amount | Terminal carboxyl group amount | Average particle diameter | Uniformity | Additive amount | Average particle diameter | Uniformity | Additive amount | Additive amount | Interparticle distance | Average particle diameter | Uniformity | Melting point | Crystallization temperature | Average particle diameter | Additive amount | Maximum dimension | Additive amount | Warpage | Unmelted powder aggregation |
| | [part by weight] | [eq/t] | [µm] | | [part by weight] | [µm] | | [part by weight] | [part by weight] | [µm] | [µm] | | [°C] | [°C] | [nm] | [part by weight) | [µm] | [part by weight] | | |
| Example 1 | 6 | 38 | 50 | 2.9 | 4 | 55 | 3.3 | - | - | - | 52 | 3.0 | 223 | 158 | - | - | - | - | Not observed | Not observed |
| Example 2 | 5 | 38 | 50 | 2.9 | 5 | 55 | 3.3 | - | - | - | 54 | 3.1 | 223 | 155 | - | - | - | - | Not observed | Not observed |
| Example 3 | 6 | 38 | 50 | 2.9 | 4 | 55 | 3.3 | - | - | - | 52 | 3.0 | 223 | 158 | 170 | 0.01 | - | - | Not observed | Not observed |
| Example 4 | 6 | 38 | 50 | 2.9 | 4 | 55 | 3.3 | - | - | - | 52 | 3.0 | 223 | 158 | - | - | 170 | 3.5 | Not observed | Not observed |
| Example 5 | 50 | 38 | - | - | 50 | - | - | - | - | 0.11 | 60 | 3.6 | 223 | 157 | - | - | - | - | Not observed | Not observed |
| Example 6 | 50 | 38 | - | - | 50 | - | - | - | - | 0.11 | 60 | 3.6 | 223 | 157 | 170 | 0.1 | - | - | Not observed | Not observed |
| Example 7 | 50 | 38 | - | - | 50 | - | - | 0.5 | 1 | 0.11 | 60 | 3.7 | 223 | 160 | - | - | - | - | Not observed | Not observed |
| Example 8 | 50 | 38 | - | - | 50 | - | - | 0.5 | 1 | 0.11 | 60 | 3.7 | 223 | 159 | - | - | - | - | Not observed | Not observed |
| Comparative example 1 | 10 | 38 | 50 | 2.9 | - | - | - | - | - | - | 50 | 2.9 | 223 | 185 | - | - | - | - | Observed | Not observed |
| Comparative example 2 | 9 | 38 | 50 | 2.9 | 1 | 55 | 3.3 | - | - | - | 51 | 2.9 | 223 | 174 | - | - | - | - | Observed | Observed |
| Comparative example 3 | 98.5 | 38 | - | - | - | - | - | 0.5 | 1 | - | 62 | 3.0 | 223 | 185 | - | - | - | - | Observed | Not observed |
| Comparative example 4 | 98.5 | 38 | - | - | - | - | - | 0.5 | 1 | - | 62 | 3.0 | 223 | 187 | - | - | - | - | Observed | Not observed |
| Comparative example 5 | 98.5 | 38 | - | - | - | - | - | 0.5 | 1 | - | 62 | 3.0 | 223 | 185 | - | - | - | - | Observed | Not observed |

### Industrial Applications of the Invention

Our invention can produce PBT/PC powder particles having fine particle diameters and uniform particle size distribution to form a smooth powder surface with a Selective Laser Sintering three-dimensional printer. Further, our PBT/PC powder particles having a proper crystallization temperature don't generate shrinkage by crystallization when the PBT/PC powder particle is melted by irradiating laser so that warpage is prevented on the three-dimensional object. Furthermore, unmelted PBT/PC powder particles can be reused because of shaping process available at a low shaping temperature.

## Claims

1. A powder particle mixture containing a polybutylene terephthalate resin and a polycarbonate resin, having:
1 to 100 µm of an average particle diameter; 4 or less of a uniformity; more than 220°C of a melting point; and 60°C or more of a difference between the melting point and a crystallization temperature.

2. The powder particle mixture according to claim 1, containing the polybutylene terephthalate resin of 100 parts by weight and the polycarbonate resin of 40 to 150 parts by weight.

3. The powder particle mixture according to claim 1 or 2, comprising a mixture of polybutylene terephthalate resin powder particles and polycarbonate resin powder particles.

4. The powder particle mixture according to claim 1 or 2, comprising polymer alloy powder particles containing the polybutylene terephthalate resin and the polycarbonate resin.

5. The powder particle mixture according to claim 4, wherein the polymer alloy powder particles have a bicontinuous phase structure of which structural period is 0.001 to 0.1 µm or have a dispersion structure of which interparticle distance is 0.01 to 1 µm.

6. The powder particle mixture according to any one of claims 1 to 5, wherein the polybutylene terephthalate resin has a terminal carboxyl group of 35 to 50 eq/t.

7. A method for producing the powder particle mixture according to claim 3, comprising a step of mixing the polybutylene terephthalate resin powder particles with the polycarbonate resin powder particles.

8. A method for producing the powder particle mixture according to claim 4 or 5, comprising a step of pulverizing the polymer alloy powder particles containing the polybutylene terephthalate resin and the polycarbonate resin.

9. The method for producing the powder particle mixture according to claim 8, wherein the polymer alloy powder particles have a bicontinuous phase structure of which structural period is 0.001 to 0.1 µm or have a dispersion structure of which interparticle distance is 0.01 to 1 µm.

10. A powder particle composition containing 100 parts by weight of the powder particle mixture according to any one of claims 1 to 6 and 0.1 to 5 parts by weight of inorganic microparticles having an average particle diameter of 20 to 500 nm.

11. The powder particle composition according to claim 10, wherein the inorganic microparticles are made of silica.

12. The powder particle composition according to claim 10 or 11, containing 100 parts by weight of the powder particle mixture according to any one of claims 1 to 6 and 25 to 150 parts by weight of an inorganic reinforcing material having an average maximum length of 1 to 200 µm.

13. The powder particle composition according to claim 12, wherein the inorganic reinforcing material is made of at least one of glass bead, glass flake, glass fiber, carbon fiber, aluminum oxide, soda-lime glass, borosilicate glass, silica, aluminosilicate ceramic, limestone, gypsum, bentonite, precipitated sodium silicate, amorphous precipitated silica, amorphous precipitated calcium silicate, amorphous precipitated magnesium silicate, amorphous precipitated lithium silicate, salt, portland cement, magnesium phosphate cement, oxymagnesium chloride cement, oxymagnesium sulfate cement, zinc phosphate cement, zinc oxide, titanium oxide and potassium titanate.

14. A method for producing a three-dimensional object, comprising a step of shaping a three-dimensional object by a selective laser sintering 3D printer from the powder particle mixture according to any one of claims 1 to 6 or from the powder particle composition according to any one of claims 10 to 13.
